# EUROPEAN PATENT SPECIFICATION

(11) **EP 4 763 400 B1**
(45) Date of publication and mention of the grant of the patent: **11.11.2026**
(21) Application number: 24222728.8
(22) Date of filing: 23.12.2024
(51) Int. Cl.: B23K 26/082, B23K 26/08, B23K 26/362, B23K 26/382, B23K 26/40, B23K 37/02, B23K 37/04, B23K 103/00

(54) **METHOD FOR MACHINING A CAVITY IN A WORKPIECE BY A LASER MACHINE TOOL, AND CORRESPONDING PROCESSING UNIT AND LASER MACHINE TOOL**
VERFAHREN ZUR BEARBEITUNG EINES HOHLRAUMES IN EINEM WERKSTÜCK MITTELS EINER LASERBEARBEITUNGSMASCHINE, ENTSPRECHENDE PROZESSOREINHEIT UND LASERBEARBEITUNGSMASCHINE
PROCÉDÉ D'USINAGE D'UNE CAVITÉ DANS UNE PIÈCE PAR UNE MACHINE-OUTIL LASER, ET PROCESSEUR ET MACHINE OUTIL LASER CORRESPONDANTS

(43) Date of publication of application: 24.06.2026
(73) Proprietor: United Machining Mill SA, 1217 Meyrin 1 (CH)
(72) Inventor: Arcari, Giovanni, 74520 Vulbens (FR); Conseil, David, 74160 Collonges-sous-Salève (FR); Lotto, Davide, 1201 Genève (CH); Viel, Julien, 74270 Marlioz (FR)
(74) Representative: Arend, Christa

(56) References cited:
- CN-A- 113 231 732
- CN-A- 117 123 928
- CN-U- 210 306 265
- US-A1- 2019 001 436

## Description

The present invention is related to a method for machining a workpiece by a laser machine tool, a processing unit for processing machining data supplied into a machine tool, and a machine tool for machining a workpiece, see claims 1, 9, and 10 respectively.

### BACKGROUND OF INVENTION

The laser ablation method and the machine tools for machining parts by laser are also generally known. Such machine tool can provide accurately and fastly laser machining. The laser beam is emitted by a laser source of the laser machine tool. A scanner is included in the laser head for guiding the laser beam. The laser head can be controlled to move in 5-axes, thus, laser beam can precisely reach all the positions on the workpiece. Since the scanner includes mirror for deflecting the light, the laser beam can be fastly moved. Thus, the machining speed of such machine tool having a scanner is very high.

For some applications a high geometry accuracy is required. Fox example, a cavity must be machined. Applying such machine tool without further measures cannot achieve the required geometry accuracy. For example, the wall of the machined cavity is not straight but has a taper or the edges of the cavity are not sharp but rounded.

### SUMMARY OF THE INVENTION

It is an objective of present invention to provide a method, a processing unit, and a device for machining a workpiece with improved geometry accuracy and surface quality. In particular, it is a further objective of the present invention to provide a method and a device for machining workpiece with straight wall and sharp edges.

According to the present invention, these objectives are achieved through the features of independent claims 1, 9, and 10. In addition, further advantageous embodiments follow from the dependent claims and the description.

In the present invention, a method for machining a workpiece to obtain a part having a desired geometry by a laser beam emitted by a laser head integrated in a machine tool is defined in claim 1. The machine tool includes a laser source for emitting a laser beam, and the laser head includes an optical system for directing the laser beam onto the defined positions on the workpiece. The optical system includes a plurality of mirrors for reflecting the laser beam emitted by the laser source, and a focal lens for passing through the reflected laser beam and focusing the laser beam to an ablation position on the workpiece to ablate the material at this position. The method comprises the steps of: defining a machining focal range applied for the machining; calculating a plurality of machining layers based on the desired geometry of the part by a processing unit; calculating for each machining layer a plurality of patches by the processing unit; and ablating the material of the workpiece based on the defined machining layers and patches. The machining focal range is a partial area of the focal lens center and within which the laser beam passes through the focal lens to reach the ablation position. Each machining layer defines a layer of the workpiece having a defined thickness. The machining layers are machined in succession. Each of patch defines an area on one machining layer of the workpiece. The area within the patch is machined from a single position of the laser head while the laser beam is directed to different positions of this area, in particular by optical system. Additionally, the patches are defined in a manner such that the laser beam passes through the focal lens only within the machining focal range to reach all the positions within the patches. By this way, the optimum area of the focal lens is utilized.

The laser ablation technique is widely used for drilling, cutting, engraving by sublimation of the material, generally metal, on the surface of the workpiece. The machining is performed over several steps, each step corresponding to the machining of a layer of the workpiece. In effect, on each laser beam pass, the material can be sublimated only for a depth. This depth is usually defined as removal rate. Normally, the removal rate is approximately in the range of 0.2 to 5 micrometres, in particular 0.2 to 2 micrometres. Because of this, many machining layers are required to obtain a desired geometry for example a cavity or the hole. The number of the layers commonly lies between several layers and several hundred layers. It depends on the depth of the cavity or the hole and the removal rate. For example, the number of layers is calculated by depth of the cavity divided by the removal rate. The workpiece can be modelled numerically by a meshing of usually triangles to generate a 3-D modelling file, e.g. a mesh file. From the 3D modelling file and the geometry of the cavity, a set of machining layers is therefore usually computed.

For each machining layer, it is necessary to compute a set of positions of the laser head making it possible to machine the areas of this layer. Usually, the optical systems used for the laser ablation with a focal length e.g. of 430 millimetres make it possible, from a given position of the laser head, to machine a planar surface measuring e.g. 300 x 300 millimetres, called field of view. The dimension of the field of view is limited due to the optical systems of the machine tool. It means that the area being machined at a given position of laser head is limited, thus, each machining layer must be divided into a plurality of patches and each of patch can be machined from a given position of the laser head. In order to machine another patch, the laser head must be repositioned by the mechanical axes. For ablating one patch, the laser head is moved to a defined position and stays at this position until the end of ablating of this patch. However, the optical system is controlled to move the laser beam to the different positions within this patch. The optical system is a very fast system, thus the laser beam can be moved very fast. A complete machining of the desired geometry for example the cavity or the hole therefore consists in ablating a plurality machining layers, with, for each layer, a set of positions that the machining head must reach, so as to machine a patch for each position for the layer concerned. Naturally, the computation of the laser head positions and of the patches machined requires enormous computer resources: several hours or even several days depending on the complexity and on the dimensions of the part, on the type of algorithm used, on the number of machining layers, etc. This computation can be generally performed by the processing unit.

In one variant, the processing unit is arranged at the outside of the machine tool, for example a specific workstation or computer. The data generated by the processing unit is defined as machining data. Before machining the machining data is transmitted from the processing unit to the machine tool.

In another variant, the processing unit is integrated in the machine tool. Thus, the computation of machining layers and patches can be directly performed in the machine tool.

In particular, the machining data is transmitted to a control unit integrated in the machine tool. The control unit is configured to control the machine head and the optical system for ablation. The machining data essentially consists of a machining toolpath, which comprises a succession of positions that the laser machining head must occupy in relation to the part, and, for each position, a succession of ablation operations corresponding to the scanning that the laser beam must perform from this position.

The focal lens is applied to converge the laser beam directed by the mirror onto one point on the workpiece. However, due to the optical limitation of the focal lens, not whole area of the focal lens provides the same quality of the focused laser beam. It is advantageous to use the area around the center of the focal lens such that the laser beam can be optimally converged onto the workpiece through the focal lens. Designing the patch in a way such that only the optimal area of the focal lens is used can improve the machining quality without any further additional optical elements.

In a preferred variant, the patch is determined in consideration of the machining focal range and the position of the machine head. For example, the size of the patch can be limited such that only the machining focal range is used for passing through the laser beam to be able to ablate all the patches. By this way the laser beam passed through the focal lens is optimally converged. The goal is to avoid directing the laser beam for passing through the area of the focal lens out of this defined range to ensure the ablation quality. Normally the whole field of lens are used to transmit the laser beam. However, optical deformation can be caused at the edge of the focal lens. For example, if the laser beam passes through the central area of the focal lens, the focal point of the laser beam has an optimum shape like round. But, if the laser beam passes through the area out of the center, the shape of the laser beam spot differs from the optimum shape such as an ellipse. The shape of the laser beam spot can directly have a large impact on the surface quality of the machined part. The vary of the shape of laser beam spot can cause the variation of the ablation depth.

Thus, in a preferred variant, the machining focal range is the area in the center of the focal lens, in particular the machining focal range is less than 70% of the whole focal lens area, preferably less than 50%, especially less than 25%.

In the present invention, an additional verification step is introduced for optimizing machining quality. This step is applied for at least one patch. In this step, a machining direction is verified. According to the present invention, for at least one patch the machining direction is determined. The direction of the laser beam defines the orientation of the laser beam emitted on the surface for ablating the patch. Preferably, for each patch the direction of the laser beam is determined and verified.

Since the patch is machined from a single position of the laser head, for each patch the machining direction must be determined based on the defined criterion and applied for machining this patch. This machining direction is the direction of the laser beam striking the surface to be machined. In effect, the highest quality of a laser machining can be achieved, when the direction of the laser beam is the normal direction of the surface to be ablated. The line perpendicular to the surface at a specific point of one patch is called the normal direction. However, it is difficult to determine the patch in a way that the laser beam always hits the surface in the normal direction. Thus, algorithm is applied to define for each patch a direction of laser beam based on design constrains.

The number of the patches has a directly influence on the machining time, because each patch requires a mechanical movement of the machine head. Thus, the number of the patches is kept as low as possible. At certain area for example the area close to the walls and to the edges, it is not possible to determine one machining direction for ablating all positions within one patch, for example caused by geometry of the area included in the patch. Thus, in an advantageous variant, the patch is divided into at least two patches.

The machining direction is a three-dimensional vector and is defined by an angle of incidence. The angle of incidence is the angle between the machining direction and the normal direction of the surface.

Normally, orientating the beam in order to get an angle of incidence as close to the normal to the surface is optimal for machining accuracy, in particular for machining the area without walls and edges. However, it is not possible to always fulfil this condition. Additionally, for machining the area including walls and edges, other conditions of the angle of incidence are required. Thus, a target range of angle of incidence is defined, in particular the target range of angle of incidence is between 10 and 90 degrees, preferably between 10 and 50 degrees, in particular between 10 and 30 degrees. If the angle of incidence is within this range, the machining accuracy can be ensured. During the calculation of the patch the angle of the incidence is also determined. If the angle of incidence for one patch is out of the defined range, the patch is recalculated. The goal is to ensure the angle of incidence is kept within the defined range for most of patches, in particular for all patches.

In an advantage variant, the target range of angle of incidence is determined based on the desired geometry.

In one variant, the range of angle of incidence can be selected by the user. This provides more flexibility of the system.

Preferably, the range of angle of incidence is determined in consideration of the material of the workpiece and/or the focal lens.

In one variant, the angle of incidence is determined for the patch depending on the position and geometry of the patch. If the patch is flat, a close to normal angle of incidence is used. If the patch is at the edge or is close to wall of the cavity, the angle of incidence is changed by tilting. This tilting is performed by a mechanical displacement of the laser head and/or a displacement of the workpiece by moving the machine mechanical axis.

In one advantageous variant, the patch is recalculated, if the angle of incidence for one patch is out of the target range of angle of incidence.

In particular, the patch is divided into at least two patches, if the angle of incidence for one patch is out of the target range of angle of incidence. Patch auto-split management is linked with angle of incidence management. If for one patch, it is difficult or impossible to find an angle of incidence that fits to the geometry of the patch, the patch is split in smaller patches and a further analysis is reiterated for each of these new patches until a proper angle of incidence for the machining direction can be set for each patch. Applying all these functions, the machining accuracy can be improved dramatically.

The present invention is further directed to a processing unit for processing machining data supplied into a machine tool for machining a workpiece to obtain a part having a desired geometry as defined in claim 9. The processing unit is configured to define a machining focal range for the focal lens applied for machining, wherein the machining focal range is a partial area of the focal lens center and within which the laser beam passes through the focal lens to reach the ablation position. The processing unit is configured to calculate a plurality of machining layers based on the desired geometry, each of the machining layer defines a layer of the workpiece having a defined thickness, wherein the machining layers are machined in succession. The processing unit is configured to calculate for each machining layer a plurality of patches, each of which defines an area on one machining layer of the workpiece, wherein the area within the patch is machined from a single position of the laser head while the laser beam is directed to different ablation positions within this area, wherein at least one patch is defined in a manner such that the laser beam passes through the focal lens only within the machining focal range to reach all the ablation positions within the patch. The processing unit is further configured to generate machining data including machining layers and patches.

The present invention is furthermore directed to a machine tool for machining a workpiece to obtain a part having a desired geometry by a laser beam as defined in claim 10. The machine tool comprises a laser head, an optical system for directing the laser beam onto the defined positions on the workpiece, the processing unit as defined above, and a control unit for receiving the machining data processed by the processing unit and control the machine head to machine the cavity based on the machining data. The laser head includes a laser source for emitting the laser beam. The optical system includes a plurality of mirrors for passing through the reflected laser beam and focusing the laser beam to an ablation position on the workpiece to ablate the material at this position.

### BRIEF DESCRIPTION OF THE DRAWINGS

In the following, a more particular description of the present invention is further described.

The embodiments are described and explained with details with reference to accompanying drawings in which:
- Fig. 1: illustrates a three-dimensional view of a machine tool;
- Fig. 2: illustrates three-dimensional view of an optical system;
- Fig. 3: illustrates a side view of a desired geometry;
- Fig. 4: illustrates one machining layers including a plurality of patches;
- Fig. 5: illustrates the focal lens and scan field;
- Fig. 6: illustrates the limited focal lens area and limited scan field area;
- Fig. 7: illustrates the method of prior art;
- Fig. 8: illustrates the method of the present invention;
- Fig. 9: illustrates a side view of the part with machining directions;
- Fig. 10: illustrates a top view of the part with patches and respective machining directions.
- Fig. 11: illustrates one variant of the present invention; and
- Fig. 12: illustrate another variant of the present invention.

### EXEMPLARY EMBODIMENTS

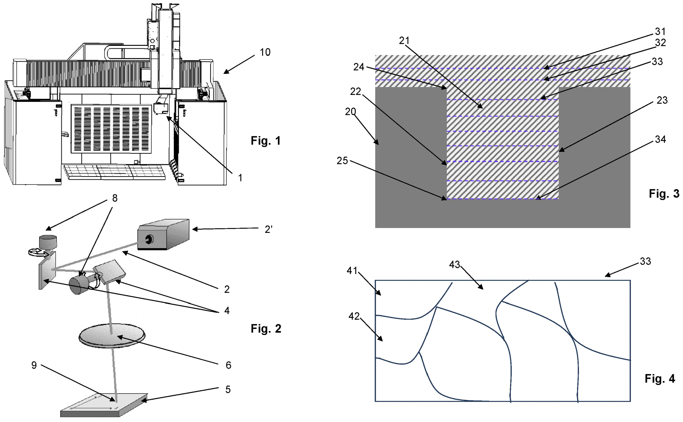

Figure 1 schematically represents an example of construction of machine tool 10 for laser ablation. The laser head 1 of the machine and the part are positioned in relation to one another according to five mechanical axes, which makes it possible to orient the direction of the laser beam emitted and to position the focal point of the laser on the surface of a workpiece to be machined, not represented, placed in the machine. The laser head 1 may be displaced in the three dimensions X, Y and Z of a Cartesian reference frame. Advantageously, the laser head is also mobile in rotation about rotation axes, not represented to obtain a greater accuracy and a greater flexibility. In the rest of the disclosure, it will be considered that, for all the examples given, it is the laser head, which is mobile according to five axes, namely three axes in translation and two axes in rotation. The machine tool comprises a laser, optical fiber or free space optics to deliver a laser beam in the optical system.

Figure 2 schematically illustrates the operation of the optical system. In this example, the laser source is included in the laser head. However, it is also possible to arrange the laser source in the other part of the machine tool not in the laser head. The laser 1 emits a laser beam 2, or more specifically a pulsed laser beam. The laser beam 2 is reflected by mirrors 4, which respectively make it possible to define, according to the axes X and Y of the Cartesian reference frame, the position of the point of projection of the laser beam on the surface of the part 7. Actuators 8 make it possible to control the angular position of the mirrors 4. The laser beam also passes through a focal lens 6 with a dynamic focusing correction, for example a F-theta lens or a telecentric lens. This device thus makes it possible to define the point of impact 9 of the laser beam with the surface of the workpiece 5 in a plane situated in the focal range considered.

Usually, the systems used with a focal length of for example 430 millimetres make it possible, from a given position of the laser head 1, to machine, using the optical system, a planar surface measuring 300 x 300 millimetres, called marking field. On the other hand, when the surface of the workpiece 5 to be machined is not planar, the focusing capacity of the lenses limits the field of view in the directions X and Y. If the curvature of the part is significant, it is then necessary to reduce the dimensions on of the patch. Naturally, this consequently increases the number of different positions occupied by the laser head to carry out the ablation job, namely the number of patches generated must be increased. This is why optical devices for zooming on the axis Z have been developed, which make it possible to vary the focusing along the axis Z and allow the machining of marking fields with marking depths of + or - 80 millimetres. The use of a focus varying device does not eliminate the relative repositioning of the laser head 1 and of the part, but it does substantially limit the number thereof.

Figure 3 illustrates schematically a sectional view of a part 20 having a desired geometry which is a cavity. A part of the material should be ablated to form the cavity 21 in the part. The section in dark colour illustrates the remaining material and also the shape of the final part. The section in lighter colour illustrates the material to be removed. The dotted lines illustrate the computed machining layers, for example the first machining layer 31, the second machining layer 32, the third machining layer 33 and the last machining layer 34. Normally, the machining layers are uniformly divided along the vertical direction. However, it is not excluded to generate the machining layers in an ununiform manner.

Figure 4 illustrates one machining layer 33. This machining layer is divided into a plurality of patches 41, 42, 43. The patches can have different shapes and sizes.

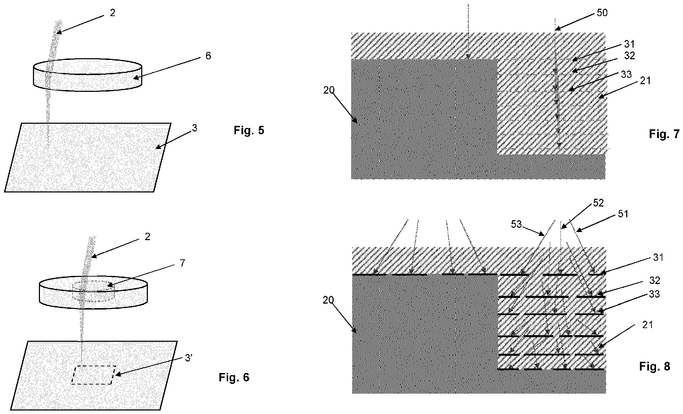

Figure 5 illustrates how the laser beam 2 passes through the focal lens 6. The laser beam 2 passes through the focal lens. The field of view 3 of using the whole area of the focal lens is shown. This is applied in the known method. If the laser beam has to pass through the focal lens area which is located on the boundary, the quality of the laser beam reaching the part is dramatically reduced. Thus, as shown in the figure 6 a machining focal range 7 is defined. This range is a limited area of the focal lens, in particular in the center of the focal lens. The laser beam only passes through this area such that the ablation quality is ensured. The patches are determined in a manner such that this condition is fulfilled. The drawbacks being that the field of view is further limited to an area 3'. Thus, the patches are determined to overcome this drawback, for example the size of the certain patches must be reduced.

Figure 7 illustrates the situation of the state of the art of machining a cavity in the part by means of laser machining. The material is ablated layer-by-layer. The layer is not divided into patches. Especially, for all layers the machining direction is the same.

Figure 8 illustrates the embodiment of the present invention. Each layer is divided into multiple patches. The machining direction for different patches can vary. The arrows directed to different directions indicate the different machining directions for different patches. For example, the first machining layer 31 includes multiple patches. Each patch is presented by one short line. The first machining direction 51, the second machining direction 52 and the third machining direction 53 are applied for three different patches on the first machining layer. In particular, the angle of incidence is adapted to be within a target range. By this way, the machining direction for each patch is optimized. This can improve the machining quality of the part.

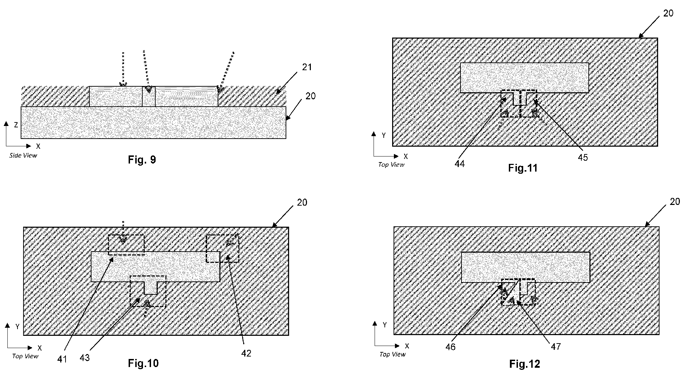

However, at certain positions of the part it is impossible to define the patch in a way that one single machining position can be determined to be applied to machine all the positions within one patch. Such examples are shown in the figures 9, 10, 11 and 12.

The figures 9 and 10 illustrate one part 20 in a side view and a top view, respectively. A cavity 21 is to be machined. Thus, the material of the hatched area shown in the figure 10 must be removed by ablation. For the sake of simplicity, only one machining layer is shown in the figure 10. Additionally, figure 10 doesn't show all the patches but merely three patches. The machining directions of these patches are illustrated by the arrow with the dotted lines. Since the figures 10, 11 and 12 illustrate the top view, the machining directions are also shown as top view. The first patch 41 includes area along only one wall, the machining direction can be determined and it is preferably perpendicular to the wall on the top view. Applying this machining direction all the positions to be ablated within this patch can be machined optimally. The second patch 42 includes the area including two walls which are perpendicular to each other, namely a corner. In order to be able to machine both walls the machining direction is determined in the direction which is not perpendicular to one of the walls but has the same angle to both walls. This direction is less optimum than the machining direction of the first patch, but it is still possible to machine the whole patch by applying one single machining direction. The third patch 43 includes an area including five walls, namely four corners. It is impossible to define one single machining direction to machine the whole patch. In order to solve this problem, the third patch has to be divided into two patches or even more than two patches.

Figure 11 and 12 show the two variants of dividing the third patch. In figure 11, the third patch 43 is divided into two patches, namely a fourth patch 44 and a fifth patch 45. For each patch a machining direction can be determined. However, the machining directions are still not the optimum machining direction. In order to improve the machining quality, the fourth patch 44 is divided again into two patches, the sixth patch 46 and, the seventh patch 47. The fifth patch is also divided into two patches. For each of those patches, one optimum machining direction can be determined. Instead of one patch 43, this area is divided into four patches. Applying the method of the present invention can improve the machining quality. For example, the cavity produced using prior art method does not feature straight wall, zero taper angle and sharp edges as required. However, the machined part using the method of the present invention can produce straight wall with zero or controlled taper angle and sharp edges.

### LIST OF REFERENCES

- 1: laser head
- 2: laser beam
- 2': laser
- 3: field of view
- 3': limited field of view
- 4: mirror
- 5: workpiece
- 6: focal lens
- 7: machining focal range
- 8: actuators
- 9: point of impact
- 10: machine tool
- 20: part
- 21: cavity to be formed
- 22: a first side wall
- 23: a second side wall
- 24: upper edge
- 25: lower edge
- 31: first machining layer
- 32: second machining layer
- 33: third machining layer
- 34: last machining layer
- 41: first patch
- 42: second patch
- 43: a third patch
- 44: a fourth patch
- 45: a fifth patch
- 46: a sixth patch
- 47: a seventh patch
- 50: machining direction
- 51: a first machining direction
- 52: a second machining direction
- 53: a third machining direction

## Claims

1. A method for machining a workpiece (5) to obtain a part (20) having a desired geometry by a laser beam (2) emitted by a laser head (1) integrated in a machine tool (10), wherein the machine tool (10) includes a laser source (2') for emitting a laser beam (2), and the laser head (1) includes an optical system for directing the laser beam (2) onto the workpiece (5), wherein the optical system includes a plurality of mirrors (4) for reflecting the laser beam (2) emitted by the laser source (2'), and a focal lens (6) for passing through the reflected laser beam (2) and focusing the laser beam (2) to an ablation position on the workpiece (5) to ablate the material at this position, **characterized by:**
a. defining a machining focal range (7) for the focal lens (6) applied for machining, wherein the machining focal range (7) is a partial area of the focal lens center and within which the laser beam (2) passes through the focal lens (6) to reach the ablation position;
b. calculating a plurality of machining layers (31, 32, 33, 34) based on the desired geometry of the part (20) by a processing unit, each of the machining layers (31, 32, 33, 34) defines a layer of the workpiece (5) having a defined thickness, wherein the machining layers (31, 32, 33, 34) are machined in succession;
c. calculating for each machining layer (31, 32, 33, 34) a plurality of patches (41, 42, 43, 44, 45, 46, 47) by the processing unit, each of which defines an area on one layer of the workpiece (5), wherein the area within the patch (41, 42, 43, 44, 45, 46, 47) is machined from a single position of the laser head (1) while the laser beam (2) is directed to different ablation positions within this area, wherein the patches (41, 42, 43, 44, 45, 46, 47) are defined in a manner such that the laser beam (2) passes through the focal lens (6) only within the machining focal range (7) to reach all the ablation positions of the patches (41, 42, 43, 44, 45, 46, 47), and wherein a machining direction (50, 51, 52, 53) is determined for at least one of the patches (41, 42, 43, 44, 45, 46, 47), wherein the machining direction (50, 51, 52, 53) defines the direction of the laser beam (2) emitted on the surface for ablating the patch (41, 42, 43, 44, 45, 46, 47), and
d. ablating the material of the workpiece (5) based on the defined machining layers (31, 32, 33, 34) and patches (41, 42, 43, 44, 45, 46, 47).

2. The method according to claim 1, wherein the patch (41, 42, 43, 44, 45, 46, 47) is determined in consideration of the machining focal range (7) and the position of the machine head.

3. The method according to claim 1 or 2, wherein the machining direction (50, 51, 52, 53) is determined for each patch (41, 42, 43, 44, 45, 46, 47).

4. The method according to claim 1, 2 or 3, wherein if it is not possible to determine one machining direction (50, 51, 52, 53) for ablating all positions within one patch (41, 42, 43, 44, 45, 46, 47), the patch (41, 42, 43, 44, 45, 46, 47) is divided into at least two patches (41, 42, 43, 44, 45, 46, 47).

5. The method according to claim 3 or 4, wherein the machining direction (50, 51, 52, 53) is defined by an angle of incidence, wherein the angle of incidence is the angle between the machining direction (50, 51, 52, 53) and the normal of the patch (41, 42, 43, 44, 45, 46, 47).

6. The method according to claim 5, wherein for at least one patch (41, 42, 43, 44, 45, 46, 47) the angle of incidence is calculated and a target range of angle of incidence is defined and the patch (41, 42, 43, 44, 45, 46, 47) is determined such that for at least one patch (41, 42, 43, 44, 45, 46, 47) the angle of incidence is within the target range of the angle of incidence.

7. The method according to claim 5 or 6, wherein if the angle of incidence for at least one patch (41, 42, 43, 44, 45, 46, 47) is out of the target range of angle of incidence, the at least one patch (41, 42, 43, 44, 45, 46, 47) is recalculated, in particular the patch (41, 42, 43, 44, 45, 46, 47) is divided into at least two patches (41, 42, 43, 44, 45, 46, 47).

8. The method according to claim 6 or 7, wherein the target range of angle of incidence is determined based on the desired geometry.

9. A processing unit for processing machining data supplied into a machine tool (10) for machining a workpiece (5) to obtain a part (20) having a desired geometry, in particular a cavity (21) or a hole, wherein the processing unit is configured to
a. define a machining focal range (7) for the focal lens (6) applied for machining, wherein the machining focal range (7) is a partial area on the focal lens center and within which the laser beam (2) passes through the focal lens (6) to reach the ablation position;
b. calculate a plurality of machining layers (31, 32, 33, 34) based on the geometry of the workpiece (5) and the cavity (21), each of the machining layers (31, 32, 33, 34) defines a layer of the workpiece (5) having a defined thickness, wherein the machining layers (31, 32, 33, 34) are intended to be machined in succession; and
c. calculate for each machining layer (31, 32, 33, 34) a plurality of patches (41, 42, 43, 44, 45, 46, 47), each of which defines an area on one layer of the workpiece (5), wherein the area within the patch (41, 42, 43, 44, 45, 46, 47) is machined from a single position of the laser head (1) while the laser beam (2) is directed to different ablation positions within this area, wherein at least one patch (41, 42, 43, 44, 45, 46, 47) is defined in a manner such that the laser beam (2) passes through the focal lens (6) only within the machining focal range (7) to reach all the ablation positions within the patch (41, 42, 43, 44, 45, 46, 47), and wherein a machining direction (50, 51, 52, 53) is determined for at least one of the patches (41, 42, 43, 44, 45, 46, 47), wherein the machining direction (50, 51, 52, 53) defines the direction of the laser beam (2) emitted on the surface for ablating the patch (41, 42, 43, 44, 45, 46, 47) and
d. generate machining data including the machining layers (31, 32, 33, 34) and patches (41, 42, 43, 44, 45, 46, 47).

10. A machine tool (10) for machining a workpiece (5) to obtain a part (20) having a desired geometry by a laser beam (2) comprising:
a. a laser source (2') for emitting the laser beam (2);
b. a laser head (1) including an optical system for directing the laser beam (2) onto the defined positions on the workpiece (5), wherein the optical system includes a plurality of mirrors (4) for reflecting the laser beam (2) emitted by the laser source (2'), and a focal lens (6) for passing through the reflected laser beam (2) and focusing the laser beam (2) to an ablation position on the workpiece (5) to ablate the material at this position;
the machine tool (10) being **characterized by**:
c. a processing unit according to claim 9;
d. a control unit for receiving the machining data processed by the processing unit and for controlling the laser head (1) to machine the workpiece (5) based on the machining data.

## Patentansprüche

1. Verfahren zum Bearbeiten eines Werkstücks (5), um ein Teil (20) mit einer gewünschten Geometrie mittels eines von einem in eine Werkzeugmaschine (10) integrierten Laserkopf (1) emittierten Laserstrahls (2) zu erhalten, wobei die Werkzeugmaschine (10) eine Laserquelle (2') zum Emittieren eines Laserstrahls (2) umfasst und der Laserkopf (1) ein optisches System zum Richten des Laserstrahls (2) auf das Werkstück (5) umfasst, wobei das optische System eine Vielzahl von Spiegeln (4) zum Reflektieren des von der Laserquelle (2') emittierten Laserstrahls (2) sowie eine Fokussierlinse (6) zum Durchlassen des reflektierten Laserstrahls (2) und zum Fokussieren des Laserstrahls (2) auf eine Abtragungsposition am Werkstück (5) umfasst, um das Material an dieser Position abzutragen, **gekennzeichnet durch**:
a. Definieren eines Bearbeitungsfokusbereichs (7) für die zur Bearbeitung eingesetzte Fokussierlinse (6), wobei der Bearbeitungsfokusbereich (7) ein Teilbereich im Bereich des Mittelpunkts der Fokussierlinse ist, innerhalb dessen der Laserstrahl (2) die Fokussierlinse (6) passiert, um die Abtragungsposition zu erreichen;
b. Berechnen einer Vielzahl von Bearbeitungsschichten (31, 32, 33, 34) basierend auf der gewünschten Geometrie des Teils (20) durch eine Verarbeitungseinheit, wobei jede der Bearbeitungsschichten (31, 32, 33, 34) eine Schicht des Werkstücks (5) mit einer definierten Dicke definiert, wobei die Bearbeitungsschichten (31, 32, 33, 34) nacheinander bearbeitet werden;
c. Berechnen einer Vielzahl von Feldern (41, 42, 43, 44, 45, 46, 47) für jede Bearbeitungsschicht (31, 32, 33, 34) durch die Verarbeitungseinheit, von denen jedes einen Bereich auf einer Schicht des Werkstücks (5) definiert, wobei der Bereich innerhalb des Feldes (41, 42, 43, 44, 45, 46, 47) von einer einzigen Position des Laserkopfes (1) aus bearbeitet wird, während der Laserstrahl (2) auf verschiedene Abtragungspositionen innerhalb dieses Bereichs gerichtet wird, wobei die Felder (41, 42, 43, 44, 45, 46, 47) so definiert sind, dass der Laserstrahl (2) die Fokussierlinse (6) nur innerhalb des Bearbeitungsfokusbereichs (7) passiert, um alle Abtragungspositionen innerhalb der Felder (41, 42, 43, 44, 45, 46, 47) zu erreichen, und wobei für mindestens eines der Felder (41, 42, 43, 44, 45, 46, 47) eine Bearbeitungsrichtung (50, 51, 52, 53) bestimmt wird, wobei die Bearbeitungsrichtung (50, 51, 52, 53) die Richtung des auf die Oberfläche gerichteten Laserstrahls (2) zum Abtragen des Feldes (41, 42, 43, 44, 45, 46, 47) definiert; und
d. Abtragen des Materials des Werkstücks (5) basierend auf den definierten Bearbeitungsschichten (31, 32, 33, 34) und Feldern (41, 42, 43, 44, 45, 46, 47).

2. Verfahren nach Anspruch 1, wobei das Feld (41, 42, 43, 44, 45, 46, 47) unter Berücksichtigung des Bearbeitungsfokusbereichs (7) und der Position des Maschinenkopfes bestimmt wird.

3. Verfahren nach Anspruch 1 oder 2, wobei die Bearbeitungsrichtung (50, 51, 52, 53) für jedes Feld (41, 42, 43, 44, 45, 46, 47) bestimmt wird.

4. Verfahren nach Anspruch 1, 2 oder 3, wobei, wenn es nicht möglich ist, eine Bearbeitungsrichtung (50, 51, 52, 53) zum Abtragen aller Positionen innerhalb eines Feldes (41, 42, 43, 44, 45, 46, 47) zu bestimmen, das Feld (41, 42, 43, 44, 45, 46, 47) in mindestens zwei Felder (41, 42, 43, 44, 45, 46, 47) unterteilt wird.

5. Verfahren nach Anspruch 3 oder 4, wobei die Bearbeitungsrichtung (50, 51, 52, 53) durch einen Einfallswinkel definiert ist, wobei der Einfallswinkel der Winkel zwischen der Bearbeitungsrichtung (50, 51, 52, 53) und der Normalen auf die Oberfläche im Feld (41, 42, 43, 44, 45, 46, 47) ist.

6. Verfahren nach Anspruch 5, wobei für mindestens ein Feld (41, 42, 43, 44, 45, 46, 47) der Einfallswinkel berechnet und ein Zielbereich für den Einfallswinkel definiert wird und das Feld (41, 42, 43, 44, 45, 46, 47) so bestimmt wird, dass für mindestens ein Feld (41, 42, 43, 44, 45, 46, 47) der Einfallswinkel innerhalb des Zielbereichs für den Einfallswinkel liegt.

7. Verfahren nach Anspruch 5 oder 6, wobei, wenn der Einfallswinkel für mindestens ein Feld (41, 42, 43, 44, 45, 46, 47) außerhalb des Zielbereichs für den Einfallswinkel liegt, das mindestens eine Feld (41, 42, 43, 44, 45, 46, 47) neu berechnet wird, insbesondere das Feld (41, 42, 43, 44, 45, 46, 47) in mindestens zwei Felder (41, 42, 43, 44, 45, 46, 47) unterteilt wird.

8. Verfahren nach Anspruch 6 oder 7, wobei der Zielbereich für den Einfallswinkel basierend auf der gewünschten Geometrie bestimmt wird.

9. Verarbeitungseinheit zur Verarbeitung von Bearbeitungsdaten, die einer Werkzeugmaschine (10) zur Bearbeitung eines Werkstücks (5) zugeführt werden, um ein Teil (20) mit einer gewünschten Geometrie, insbesondere einen Hohlraum (21) oder eine Bohrung, zu erhalten, wobei die Verarbeitungseinheit für Folgendes ausgelegt ist:
a. Definieren eines Bearbeitungsfokusbereichs (7) für die zur Bearbeitung eingesetzte Fokussierlinse (6), wobei der Bearbeitungsfokusbereich (7) ein Teilbereich im Bereich des Mittelpunkts der Fokussierlinse ist, innerhalb dessen der Laserstrahl (2) die Fokussierlinse (6) passiert, um die Abtragungsposition zu erreichen;
b. Berechnen einer Vielzahl von Bearbeitungsschichten (31, 32, 33, 34) basierend auf der Geometrie des Werkstücks (5) und des Hohlraums (21), wobei jede der Bearbeitungsschichten (31, 32, 33, 34) eine Schicht des Werkstücks (5) mit einer definierten Dicke definiert, wobei die Bearbeitungsschichten (31, 32, 33, 34) nacheinander bearbeitet werden sollen; und
c. Berechnen einer Vielzahl von Feldern (41, 42, 43, 44, 45, 46, 47) für jede Bearbeitungsschicht (31, 32, 33, 34), von denen jedes einen Bereich auf einer Schicht des Werkstücks (5) definiert, wobei der Bereich innerhalb des Feldes (41, 42, 43, 44, 45, 46, 47) von einer einzigen Position des Laserkopfes (1) aus bearbeitet wird, während der Laserstrahl (2) auf verschiedene Abtragungspositionen innerhalb dieses Bereichs gerichtet wird, wobei mindestens ein Feld (41, 42, 43, 44, 45, 46, 47) so definiert wird, dass der Laserstrahl (2) die Fokussierlinse (6) nur innerhalb des Bearbeitungsfokusbereichs (7) passiert, um alle Abtragungspositionen innerhalb des Feldes (41, 42, 43, 44, 45, 46, 47) zu erreichen, und wobei für mindestens eines der Felder (41, 42, 43, 44, 45, 46, 47) eine Bearbeitungsrichtung (50, 51, 52, 53) bestimmt wird, wobei die Bearbeitungsrichtung (50, 51, 52, 53) die Richtung des auf die Oberfläche gerichteten Laserstrahls (2) zum Abtragen des Feldes (41, 42, 43, 44, 45, 46, 47) definiert, und
d. Erzeugen von Bearbeitungsdaten einschließlich der Bearbeitungsschichten (31, 32, 33, 34) und der Felder (41, 42, 43, 44, 45, 46, 47).

10. Werkzeugmaschine (10) zur Bearbeitung eines Werkstücks (5) zum Erhalten eines Teils (20) mit einer gewünschten Geometrie mittels eines Laserstrahls (2), umfassend:
a. eine Laserquelle (2') zum Emittieren des Laserstrahls (2);
b. einen Laserkopf (1) mit einem optischen System zum Richten des Laserstrahls (2) auf definierte Positionen auf dem Werkstück (5), wobei das optische System eine Vielzahl von Spiegeln (4) zum Reflektieren des von der Laserquelle (2') emittierten Laserstrahls (2) sowie eine Fokussierlinse (6) zum Durchlassen des reflektierten Laserstrahls (2) und zum Fokussieren des Laserstrahls (2) auf eine Abtragungsposition am Werkstück (5) umfasst, um das Material an dieser Position abzutragen;
wobei die Werkzeugmaschine (10) **gekennzeichnet ist durch**:
c. eine Verarbeitungseinheit nach Anspruch 9;
d. eine Steuereinheit zum Empfangen der von der Verarbeitungseinheit verarbeiteten Bearbeitungsdaten und zum Steuern des Laserkopfes (1) zum Bearbeiten des Werkstücks (5) basierend auf den Bearbeitungsdaten.

## Revendications

1. Procédé destiné à usiner une pièce de fabrication (5) pour obtenir une pièce (20) ayant une géométrie souhaitée par un faisceau laser (2) émis par une tête laser (1) intégrée dans une machine-outil (10), la machine-outil (10) comportant une source laser (2') destinée à émettre un faisceau laser (2), et la tête laser (1) comportant un système optique destiné à diriger le faisceau laser (2) sur la pièce de fabrication (5), le système optique comportant une pluralité de miroirs (4) destinés à réfléchir le faisceau laser (2) émis par la source laser (2'), et une lentille de focalisation (6) destinée à faire passer le faisceau laser réfléchi (2) et focaliser le faisceau laser (2) sur une position d'ablation sur la pièce de fabrication (5) afin de réaliser l'ablation du matériau à cette position, **caractérisé par** :
a. la définition d'une plage focale d'usinage (7) pour la lentille de focalisation (6) utilisée pour l'usinage, la plage focale d'usinage (7) étant une zone partielle située au centre de la lentille de focalisation et à l'intérieur de laquelle le faisceau laser (2) traverse la lentille de focalisation (6) pour atteindre la position d'ablation ;
b. le calcul d'une pluralité de couches d'usinage (31, 32, 33, 34) sur la base de la géométrie souhaitée de la pièce (20) par une unité de traitement, chacune des couches d'usinage (31, 32, 33, 34) définissant une couche de la pièce de fabrication (5) ayant une épaisseur définie, les couches d'usinage (31, 32, 33, 34) étant successivement usinées ;
c. le calcul, pour chaque couche d'usinage (31, 32, 33, 34), d'une pluralité de zones d'usinage (41, 42, 43, 44, 45, 46, 47) par l'unité de traitement, chacune d'entre elles définissant une zone sur une couche de la pièce de fabrication (5), la zone à l'intérieur de la zone d'usinage (41, 42, 43, 44, 45, 46, 47) étant usinée à partir d'une seule position de la tête laser (1) tandis que le faisceau laser (2) est dirigé vers différentes positions d'ablation à l'intérieur de cette zone, les zones d'usinage (41, 42, 43, 44, 45, 46, 47) étant définies de manière à ce que le faisceau laser (2) ne traverse la lentille de focalisation (6) qu'à l'intérieur de la plage focale d'usinage (7) pour atteindre toutes les positions d'ablation des zones d'usinage (41, 42, 43, 44, 45, 46, 47), et une direction d'usinage (50, 51, 52, 53) étant déterminée pour au moins une des zones d'usinage (41, 42, 43, 44, 45, 46, 47), la direction d'usinage (50, 51, 52, 53) définissant la direction du faisceau laser (2) émis sur la surface pour l'ablation de la zone d'usinage (41, 42, 43, 44, 45, 46, 47) ; et
d. l'ablation du matériau de la pièce de fabrication (5) sur la base des couches d'usinage (31, 32, 33, 34) et des zones d'usinage (41, 42, 43, 44, 45, 46, 47) définies.

2. Procédé selon la revendication 1, dans lequel la zone d'usinage (41, 42, 43, 44, 45, 46, 47) est déterminée en tenant compte de la plage focale d'usinage (7) et de la position de la tête laser.

3. Procédé selon la revendication 1 ou 2, dans lequel la direction d'usinage (50, 51, 52, 53) est déterminée pour chaque zone d'usinage (41, 42, 43, 44, 45, 46, 47).

4. Procédé selon la revendication 1, 2 ou 3 dans lequel, s'il n'est pas possible de déterminer une direction d'usinage (50, 51, 52, 53) pour l'ablation de toutes les positions à l'intérieur d'une zone d'usinage (41, 42, 43, 44, 45, 46, 47), la zone d'usinage (41, 42, 43, 44, 45, 46, 47) est divisée en au moins deux zones d'usinage (41, 42, 43, 44, 45, 46, 47).

5. Procédé selon la revendication 3 ou 4, dans lequel la direction d'usinage (50, 51, 52, 53) est définie par un angle d'incidence, l'angle d'incidence étant l'angle entre la direction d'usinage (50, 51, 52, 53) et la normale à la zone d'usinage (41, 42, 43, 44, 45, 46, 47).

6. Procédé selon la revendication 5 dans lequel, pour au moins une zone d'usinage (41, 42, 43, 44, 45, 46, 47), l'angle d'incidence est calculé et une plage cible d'angle d'incidence est définie et la zone d'usinage (41, 42, 43, 44, 45, 46, 47) est déterminée de telle sorte que, pour au moins une zone d'usinage (41, 42, 43, 44, 45, 46, 47), l'angle d'incidence se situe à l'intérieur de la plage cible de l'angle d'incidence.

7. Procédé selon la revendication 5 ou 6 dans lequel, si l'angle d'incidence pour au moins une zone d'usinage (41, 42, 43, 44, 45, 46, 47) se situe en dehors de la plage cible d'angle d'incidence, l'au moins une zone d'usinage (41, 42, 43, 44, 45, 46, 47) est recalculée, en particulier la zone d'usinage (41, 42, 43, 44, 45, 46, 47) est divisée en au moins deux zones d'usinage (41, 42, 43, 44, 45, 46, 47).

8. Procédé selon la revendication 6 ou 7, dans lequel la plage cible d'angle d'incidence est déterminée sur la base de la géométrie souhaitée.

9. Unité de traitement destinée à traiter des données d'usinage fournies à une machine-outil (10) pour usiner une pièce de fabrication (5) afin d'obtenir une pièce (20) ayant une géométrie souhaitée, en particulier une cavité (21) ou un trou, l'unité de traitement étant conçue pour
a. définir une plage focale d'usinage (7) pour la lentille de focalisation (6) utilisée pour l'usinage, la plage focale d'usinage (7) étant une zone partielle située au centre de la lentille de focalisation et à l'intérieur de laquelle le faisceau laser (2) traverse la lentille de focalisation (6) pour atteindre la position d'ablation ;
b. calculer une pluralité de couches d'usinage (31, 32, 33, 34) sur la base de la géométrie de la pièce de fabrication (5) et de la cavité (21), chacune des couches d'usinage (31, 32, 33, 34) définissant une couche de la pièce de fabrication (5) ayant une épaisseur définie, les couches d'usinage (31, 32, 33, 34) étant destinées à être successivement usinées ; et
c. calculer, pour chaque couche d'usinage (31, 32, 33, 34), une pluralité de zones d'usinage (41, 42, 43, 44, 45, 46, 47), chacune d'entre elles définissant une zone sur une couche de la pièce de fabrication (5), la zone à l'intérieur de la zone d'usinage (41, 42, 43, 44, 45, 46, 47) étant usinée à partir d'une seule position de la tête laser (1) tandis que le faisceau laser (2) est dirigé vers différentes positions d'ablation à l'intérieur de cette zone, au moins une zone d'usinage (41, 42, 43, 44, 45, 46, 47) étant définie de manière à ce que le faisceau laser (2) ne traverse la lentille de focalisation (6) qu'à l'intérieur de la plage focale d'usinage (7) pour atteindre toutes les positions d'ablation à l'intérieur de la zone d'usinage (41, 42, 43, 44, 45, 46, 47), et une direction d'usinage (50, 51, 52, 53) étant déterminée pour au moins une des zones d'usinage (41, 42, 43, 44, 45, 46, 47), la direction d'usinage (50, 51, 52, 53) définissant la direction suivant laquelle le faisceau laser (2) est dirigé sur la surface pour l'ablation de la zone d'usinage (41, 42, 43, 44, 45, 46, 47) ; et
d. générer des données d'usinage incluant les couches d'usinage (31, 32, 33, 34) et les zones d'usinage (41, 42, 43, 44, 45, 46, 47).

10. Machine-outil (10) destinée à usiner une pièce de fabrication (5) pour obtenir une pièce (20) ayant une géométrie souhaitée par un faisceau laser (2) comprenant :
a. une source laser (2') destinée à émettre le faisceau laser (2) ;
b. une tête laser (1) comportant un système optique destiné à diriger le faisceau laser (2) sur les positions définies sur la pièce de fabrication (5), le système optique comportant une pluralité de miroirs (4) destinés à réfléchir le faisceau laser (2) émis par la source laser (2'), et une lentille de focalisation (6) destinée à faire passer le faisceau laser réfléchi (2) et à focaliser le faisceau laser (2) sur une position d'ablation sur la pièce de fabrication (5) afin de réaliser l'ablation du matériau à cette position ;
la machine-outil (10) étant **caractérisée par** :
c. une unité de traitement selon la revendication 9 ;
d. une unité de commande destinée à recevoir les données d'usinage traitées par l'unité de traitement et à commander la tête laser (1) pour usiner la pièce de fabrication (5) sur la base des données d'usinage.
